# EUROPÄISCHE PATENTSCHRIFT

(11) **EP 2 168 651 B1**
(45) Veröffentlichungstag und Bekanntmachung des Hinweises auf die Patenterteilung: **14.03.2012**
(21) Anmeldenummer: 09167968.8
(22) Anmeldetag: 17.08.2009
(51) Int. Cl.: B01D 35/153

(54) **Flüssigkeitsfilter**
Liquid filter
Filtre de liquide

(30) Priorität: 25.09.2008 DE 102008049006
(43) Veröffentlichungstag der Anmeldung: 31.03.2010
(73) Patentinhaber: Mahle International GmbH, 70376 Stuttgart (DE)
(72) Erfinder: Kimmerle, Andreas, 71332 Waiblingen (DE); Kunzi, Harald, 71364 Winnenden (DE); Ruppert, Hans-Martin, 73760 Ostfildern (DE); Hagen, Zelßmann, 71083 Herrenberg (DE)
(74) Vertreter: BRP Renaud & Partner

(56) Entgegenhaltungen:
- DE-A1- 10 353 424
- DE-A1- 19 951 085
- DE-A1-102007 009 352
- DE-U1-202005 002 955

## Beschreibung

Die vorliegende Erfindung betrifft einen Flüssigkeitsfilter, insbesondere einen Ölfilter, umfassend ein Filtergehäuse, bestehend aus einem Topf und einem Deckel, sowie einem wechselbaren Filterelement mit einer oberen und einer unteren Endscheibe gemäß dem Oberbegriff des Anspruchs 1.

Aus der DE 39 03 675 A1 ist ein Flüssigkeitsfilter, insbesondere Ölfilter, bekannt, der ein Filtergehäuse bestehend aus einem Topf und einem Deckel aufweist. Am Boden des Topfes befinden sich die Zu- und Abläufe für das Öl. Im Innern des Filtergehäuses befindet sich ein Filterelement das nach einer gewissen Standzeit gewechselt werden muss, da sich die Verunreinigungen daran anlagern. Das Filterelement wird am Deckel des Filtergehäuses lösbar befestigt. Damit beim Herausnehmen des Filterelementes beim Wechseln desselben nicht das Öl im Topf des Filtergehäuses stehen bleibt, öffnet ein, am unteren Ende des Filterelementes angebrachtes Verschlusselement einen Leerlaufkanal.

Aus der DE 20 2005 02 955 U1 ist ein Flüssigkeitsfilter, umfassend ein Filtergehäuse, bestehend aus einem Filtergehäusetopf und einem Filtergehäusedecke sowie einem wechselbaren Filterelement mit einer oberen und einer unteren Endscheibe bekannt. Das Flüssigkeitsfilter weist zudem einen Zulauf sowie einen Ablauf für die Flüssigkeit sowie einen Leerlaufkanal für die Flüssigkeit auf, um beim Wechseln des Filterelementes das Filtergehäuse von der Flüssigkeit zu entleeren.

Aus der DE 199 51 085 A1 ist wiederum ein Flüssigkeitsfilter mit einem gattungsgemäßen Filtergehäuse und einem gattungsgemäßen Filterelement bekannt.

Die vorliegende Erfindung beschäftigt sich mit dem Problem, für einen Flüssigkeitsfilter der gattungsgemäßen Art, eine alternative Ausführungsform anzugeben.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem Flüssigkeitsfilter, insbesondere bei einem Ölfilter, mit einem Filterelement, ein dieses in Axialrichtung durchdringendes Verschlusselement vorzusehen, welches im Betrieb des Flüssigkeitsfilters einen Leerlaufkanal verschließt. Ein Filtergehäuse besteht dabei aus einem Topf und einem Deckel, in dem das austauschbare Filterelement mit einer oberen und einer unteren Endscheibe angeordnet ist. Darüber hinaus umfasst das Flüssigkeitsfilter einen Zu- und einen Ablauf für die Flüssigkeit sowie oben genannten Leerlaufkanal für die Flüssigkeit, um beim Wechseln des Filterelementes das Filtergehäuse von der Flüssigkeit zu entleeren. Zum Entleeren des Topfes, muss das Verschlusselement in Axialrichtung aus dem Leerlaufkanal entfernt werden, wobei ein zugehöriges Filterelement beispielsweise eine kreissegmentartige Ausnehmung zur Aufnahme des Verschlusselementes aufweist. Hierdurch ist es beispielsweise ausgeschlossen, ein anderes, nicht diese Ausnehmung aufweisendes Filterelement einzusetzen und damit das Flüssigkeitsfilter zu betreiben.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Flüssigkeits- filter, bei der Montage,
- Fig. 2: eine Schnittdarstellung durch einen alternativen erfindungsgemäßen Flüssigkeitsfilter, ebenfalls bei der Montage,
- Fig. 3: eine Draufsicht auf eine obere Endscheibe,
- Fig. 4: eine Detailansicht eines Verschlusselementes.

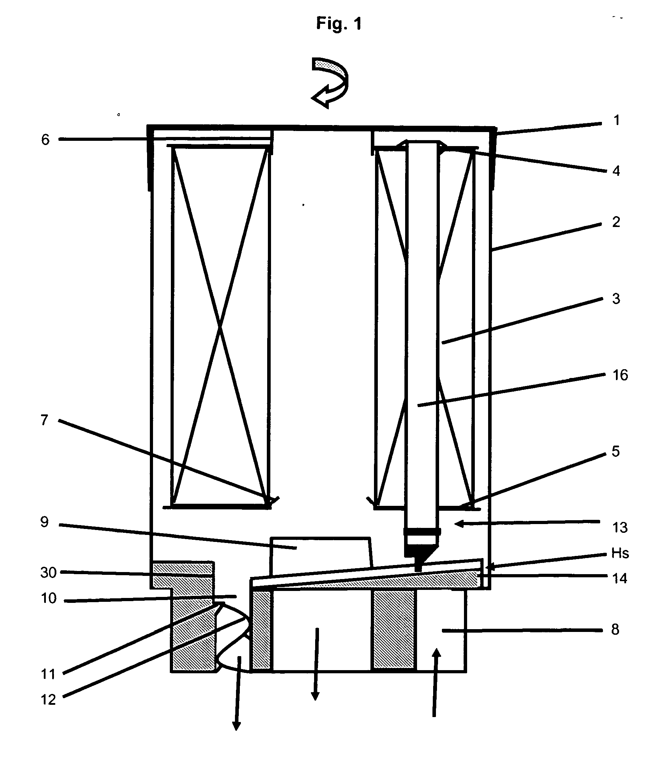

In Fig. 1 ist ein Flüssigkeitsfilter bei der Montage gezeigt. Es handelt sich im Besonderen um einen Ölfilter für Kraftfahrzeuge. Diese haben wegen des relativ starken Abriebs im Motorblock ein Filterelement 3, das regelmäßig gewechselt werden muss. Das Gehäuse des Ölfilters ist aufgebaut aus einem Topf 2 und einem Deckel 1. Am Deckel 1 wird das wechselbare Filterelement 3 befestigt. Je nach Bedarf wird der Deckel 1 mit gewechselt oder nur ein neues Filterelement 3 am Deckel 1 befestigt, z.B. durch Festclipsen an Halterungen 6 des Deckels 1. Der Deckel 1 weist zum Befestigten am Topf 2 des Filtergehäuses ein Gewinde und eine Dichtung auf (nicht gezeigt).

Das Filterelement 3 besitzt eine obere Endscheibe 4, die vorzugsweise aus Kunststoff ist, da sie zur Befestigung eines Verschlusselementes 13 dient. An ihr werden die Halterungen 6 festgeclipst. Das Filterelement 3 kann bei Bedarf auch eine Innenzarge (nicht gezeigt) aufweisen. Am unteren Ende des Filterelementes 3 befindet sich eine weitere Endscheibe 5, die aus Kunststoff, Vlies oder aus Filtermaterial besteht.

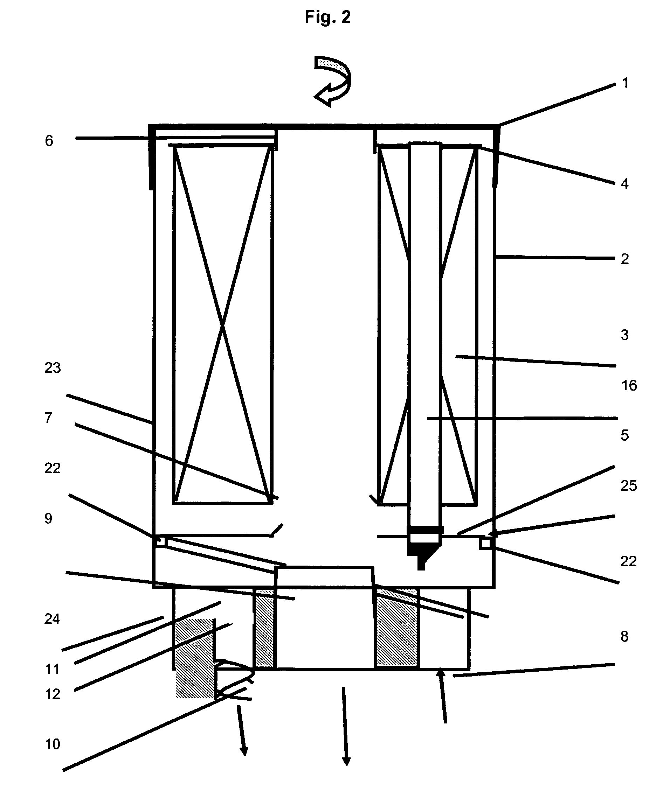

In den beiden Endscheiben 4,5 sind passend zueinander Öffnungen vorgesehen, durch die das Verschlusselement 13 vor der Montage des Filterelementes 3 im Filtergehäuse eingesetzt wird. Alternativ kann auch das Filterelement 3 in das Filtergehäuse eingesetzt werden und das Verschlusselement 13 befindet sich am Deckel 1 und wird durch die Öffnungen eingesetzt. Eine weitere Alternative ist, dass das Verschlusselement 13 am Deckel 1 angeformt ist und das Filterelement 3 vor der Montage am Deckel 1 befestigt wird. Bei allen drei Alternativen ist eine Einführhilfe 14 - wie in Fig. 1 oder Fig. 2 gezeigt - notwendig, damit das Verschlusselement 13 die Öffnung eines Leerlaufkanals 10 trifft und diesen im Einbauzustand dicht verschließt.

Eine weitere alternative Ausgestaltung kann ein Verschlusselement 13 vorsehen, das zuerst in die Öffnung des Leerlaufkanals 10 eingesetzt wird, wobei daran anschließend das Filterelement 3 übergeschoben wird, so dass das Verschlusselement 13 durch die Öffnungen in der oberen und unteren Endscheibe 4,5 in seiner Position gehalten wird. Bei diesem Fall ist keine Einführhilfe 14 notwendig. Vorzugsweise sollte das Verschlusselement 13 am oberen Ende eine Vorrichtung aufweisen, so dass man es beim Abschrauben des Deckels 1 gleich mit herausziehen kann, damit die Leerlauffunktion auch hier gegeben ist. Eine solche Vorrichtung könnte zum Beispiel eine Öse sein, in die ein Haken am Deckel 1 nur eingreift, wenn der Deckel 1 geöffnet wird. Das Filterelement 3 sollte dazu im Filtergehäuse drehbar sein.

Das Verschlusselement 13 wird am Filterpapier oder Filtervlies vorbei durch das Filterelement 3 durchgesteckt. Dadurch bleibt die Trennung in Roh und Reinseite erhalten. Man verliert zwar radial an Filterfläche, die man axial aber wieder ausgleichen kann, wenn der Bedarf besteht. Das Filterpapier ist ein üblicher Faltenstern. In diesem Fall gibt es allerdings dort wo das Verschlusselement 13 durch das Filterelement 3 hindurchgreift, keine Zacke des Faltensterns (in den Figuren nicht gezeigt).

An der unteren Endscheibe 5 ist auf der Innenseite eine Dichtlippe 7 vorgesehen. Sie ist aus dem gleichen Material wie die Endscheibe 5 ausgebildet und dichtet die Reinseite gegen die Rohseite ab, indem sie sich an einen Dom 9 des Filterelementes 3 anlegt. Durch den Dom 9 der aus einem Boden 24 des Topfes 2 in das Filtergehäuse hineinragt, fließt das gereinigte Öl wieder hinaus und in den Motor oder zurück in einen Öltank. Durch eine Öffnung 8 im Boden 24 des Topfes 2 gelangt im Betrieb das Öl in das Filtergehäuse hinein.

Alternativ kann es auch umgekehrt sein, dass im Boden 24 des Topfes 2 des Filtergehäuses eine Öffnung ist, in die ein Vorsprung am Filterelement 3 samt Dichtung eingreift (nicht gezeigt) und dadurch die Flüssigkeit den Flüssigkeitsfilter wieder verlässt.

Zur Montage wird gemäß Fig. 1 und 2 ein neues Filterelement 3 am Deckel 1 befestigt. Dann wird das Filterelement 3 in den Topf 2 des Filtergehäuses eingeführt. Zum Verschließen des Leerlaufkanals 10 des Ölfilters, der bei der Demontage des Filterelementes 3 für das Ablassen der im Filtergehäuse stehenden Flüssigkeit, hier Öl, benötigt wird, ist das Verschlusselement 13 vorgesehen. Damit dieses auch genau die Öffnung des Leerlaufkanals 10 trifft, ist in Fig. 1 am Boden 24 des Topfes 2 des Filtergehäuses eine Einführhilfe 14 vorgesehen. Sie hat die Form einer Rampe. Die Einführhilfe 14 folgt einer Wand 23 des Topfes 2 des Filtergehäuses und hat in etwa eine kreisförmige Ausgestaltung. Die Darstellung in Fig. 1 ist dabei stark vereinfacht.

Die Einführhilfe 14 hat eine geeignete Steigung S und eine Starthöhe Hs. Das Verschlusselement 13 trifft erst auf die Einführhilfe 14, wenn der Deckel 1 bereits in das Gewinde des Topfes 2 eingreift. Das Verschlusselement 13 kann an beliebiger Stelle auf die Einführhilfe 14 treffen, durch Mitnahme des Filterelementes 3 am Deckel 1 wird das zapfenartige Verschlusselement 13 mit Hilfe der Einführhilfe 14 zur Öffnung des Leerlaufkanals 10 geführt. Benötigt das Verschlusselement 13 jedoch nur etwa eine Vierteldrehung, um in die Öffnung des Leerlaufkanals 10 zu kommen, so ist die Halterung 6 am Deckel 1 des Filtergehäuses so gestaltet, dass dann nur noch der Deckel 1 gedreht wird und nicht mehr das Filterelement 3 bis das Filtergehäuse dicht verschlossen ist.

Die Starthöhe Hs ist durch die axiale Länge des Verschlusselements 13 definiert. Denn an dieser Stelle soll nach der Montage des Filterelementes 3 die untere Endscheibe 5 zur Auflage kommen. Die Starthöhe Hs ist gleichzeitig eine Verdrehsicherung für das Verschlusselement 13, da sie an der Öffnung des Leerlaufkanals 10 einen Anschlag 30 für das Verschlusselement 13 bildet. Die Steigung S der Einführhilfe 14 hängt auch von der Größe des Filtergehäuses ab. Insgesamt sollte Hs nur so hoch wie nötig sein, um den Raumbedarf des Flüssigkeitsfilters möglichst klein zu halten. Die Einführhilfe 14 führt das Verschlusselement 13, während der Deckel 1 weiter fest gedreht wird, zur Öffnung des Leerlaufkanals 10 hin. Das Verschlusselement 13 stößt dann am Anschlag 30 der Einführhilfe 14 an und rutscht in die Öffnung des Leerlaufkanals 10 und verschließt diese dicht.

Damit beim Entfernen des Filterelementes 3 beim Filterwechsel, die im Filtergehäuse stehende Flüssigkeit (Öl) ablaufen kann, muss das Verschlusselement 13 aus der Öffnung des Leerlaufkanals 10 entfernt werden. Dies geschieht im ersten erfindungsgemäßen Ausführungsbeispiel über das Abschrauben des Deckels 1 vom Topf 2 des Filtergehäuses. Die Flüssigkeit fließt dann durch den Leerlaufkanal 10 ab. Damit dies schneller geschieht und der Leerlaufkanal 10 kleiner ausgestaltet werden kann, ist eine schraubenartige Flüssigkeitsleiteinrichtung 12 im Leerlaufkanal 10 vorgesehen. Es handelt sich um einen kleinen Absatz 11, der sich auf der Innenseite des Leerlaufkanals 10 in einer Windung bis zum äußeren Rand des Filtergehäuses erstreckt. Durch diese Flüssigkeitsleiteinrichtung 12 bekommt die abfließende Flüssigkeit einen Drall, so dass die Flüssigkeit schneller durch diese enge Öffnung des Leerlaufkanals 10 strömen kann. Der Absatz 11 beginnt um h_{z} unterhalb der Starthöhe Hs der Einführhilfe 14, daher kann er zusätzlich als Aufsetzpunkt für das Verschlusselement 13 dienen. Die Form des Verschlusselements 13 und die Form der Öffnung des Leerlaufkanals 10 sind vorzugsweise komplementär zueinander ausgebildet, damit die Öffnung des Leerlaufkanals 10 durch die Dichtung 17 am Verschlusselement 13 und das Verschlusselement 13 selbst abgedichtet wird. Ist genug Platz für einen größeren Leerlaufkanal 10, so wird diese Flüssigkeitsleiteinrichtung 12 nicht benötigt. Der Absatz 11 kann aber sehr wohl vorhanden sein.

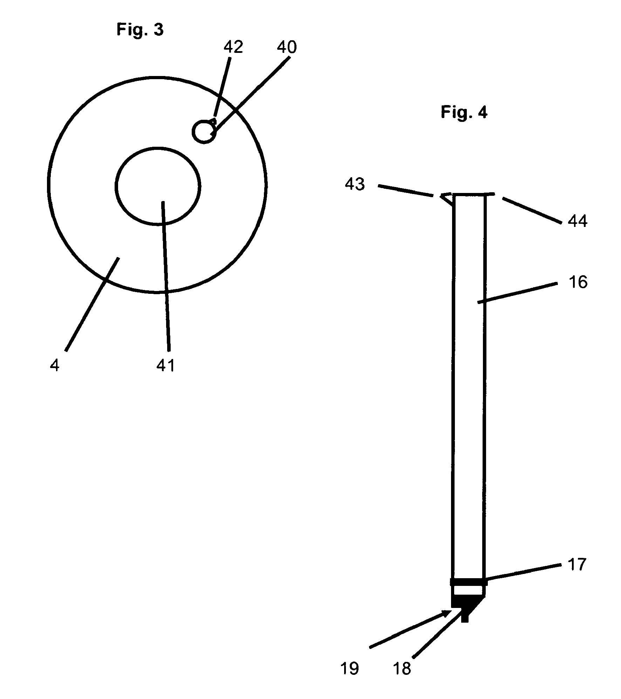

Das Verschlusselement 13 hat einen Halteteil 16, der den Gleitteil 18 mit der oberen Endscheibe 4 und der unteren Endscheibe 5 verbindet. Die Form des Halteteils 16 ist beliebig, er sollte allerdings so stabil sein, dass er nicht bei den während der Montage auftretenden Reibungskräften abbricht. Am Halteteil 16 ist eine kleine Nut angebracht in der die Dichtung 17 gehalten wird. Das Halteteil 16 weist in seinem oberen Bereich eine Ausbuchtung 43 und einen Teller 44 auf. Mit der Ausbuchtung 43, zu der es in der oberen Endscheibe 4 eine passende Einbuchtung 42 gibt, wird das Verschlusselement 13 so orientiert eingebaut, dass es richtig herum in die Öffnung des Leerlaufkanals 10 eingeführt wird. Der Teller 44 dient dazu, dass das Verschlusselement 13 nicht durch das Filterelement 3 hindurch geht. Bei den anderen Ausführungsbeispielen kann man auch auf den Teller 44 verzichten. Solange jedoch eine Einführhilfe 14 verwendet wird, sollte die Ausbuchtung 43 vorhanden sein. Damit der Halteteil 16 des Verschlusselements 13 möglichst wenig Filterfläche verbraucht ist er idealer weise dreieckig, so dass er genau zwischen zwei Zacken des Faltensternes des Filterelementes 3 passt. Das Halteteil 16 kann aber auch rund wie in Fig. 3 und 4 gezeigt oder rechteckig sein. Falls das Verschlusselement 13 zu locker in der Öffnung des Leerlaufkanals 10 sitzt, kann im Deckel 1 auch noch eine Feder vorgesehen werde, die das Verschlusselement 13 in Schließrichtung vorspannt (nicht gezeigt).

Das Gleitteil 18 ist vorzugsweise aus demselben Material wie das Halteteil 16, es kann aber auch aus einem anderen jedoch formstabilen leicht kompressiblem Material sein. Die Form des Gleitteils 18 ergibt sich aus der Form der Öffnung des Leerlaufkanals 10 und der Einführhilfe 14. Die Höhe zwischen der unteren Endscheibe 5 und einer Auflagefläche 19 ist auch am Leerlaufkanal 10 gegeben, so dass das Verschlusselement 13 genau in die Öffnung des Leerlaufkanals 10 passt. Das Gleitteil 18 muss vom Material her so gewählt werden, dass es bestens gleitet auf der Einführhilfe 14 und keinen Abrieb produziert, der das Filterelement 3 verunreinigen könnte.

In Fig. 2 ist eine Alternative für die Einführhilfe 14 am Boden 24 des Topfes 2 des Ölfiltergehäuses gezeigt. Statt am Boden 24 kann die Einführhilfe 14 auch in die Wand 23 des Topfes 2 integriert sein. In der Wand 23 des Topfes 1 werden mindestens zwei Vorsprünge 22 vorgesehen. Mit einer halben Windung führen sie zum Boden 24 des Topfes 2. Die untere Endscheibe 5 hat bei dieser Alternative an der Außenseite mindestens zwei Nasen 25. Bei der Montage des Filterelementes 3, wenn der Deckel 1 an dem Topf 2 festgeschraubt wird, kommen die Nasen 25 auf den Vorsprüngen 22 zur Auflage. Durch weiteres drehen des Deckels 1 gleiten die Nasen 25 auf den Vorsprüngen 22 nach unten, bis das Verschlusselement 13 in die Öffnung des Leerlaufkanals 10 eingreift und diese abdichtet. Wie viele Windungen benötigt werden hängt auch vom Gewinde im Deckel 1 und am Topf 2 ab. Bei dieser Alternative kann man weiter den Raumbedarf des Ölfilters reduzieren, da die untere Endscheibe 5 direkt auf dem Boden 24 des Topfes 2 nach der Montage aufliegt. Auch hier ist die Flüssigkeitsleiteinrichtung 12 im Leerlaufkanal10 vorgesehen. Die Form der Vorsprünge 22 ist beliebig wählbar. Die Form der Nasen 25 ist ebenfalls beliebig wählbar, jedoch sollten sie möglichst schmal sein, aber nicht zu kurz. Schmal deshalb, weil das schmutzige Öl außen um das Filterelement 3 frei strömen können sollte, so dass die gesamte Filterfläche ausgenutzt wird. Der Rest des Ölfilters ist identisch mit dem ersten Ausführungsbeispiel. Statt des Verschlusselements 13 kann bei dem Ausführungsbeispiel in Fig. 6 auch eine kompressible Dichtfläche verwendet werden, die eine ausreichende Dichtigkeit garantiert.

Alle Figuren, Zeichnungen sind lediglich schematische Darstellungen der Funktionsweise des erfindungsgemäßen Flüssigkeitsfilters. In allen Ausführungsbeispielen hat die Einführhilfe 14 dieselbe Drehrichtung wie das Gewinde im Deckel 1 und am Topf 2 des Filtergehäuses. Das Filterelement 3 ist am Deckel 1 durch die Halterungen 6 bedingt drehbar gelagert.

## Patentansprüche

1. Flüssigkeitsfilter, insbesondere ein Ölfilter, umfassend ein Filtergehäuse, bestehend aus einem Topf (2) und einem Deckel (1), sowie ein wechselbares Filterelement (3), mit einer oberen und einer unteren Endscheibe (4, 5),
wobei das Flüssigkeitsfilter
einen Zu- (8) und einen Ablauf (9) für die Flüssigkeit umfasst, sowie einen Leerlaufkanal (10) für die Flüssigkeit, um beim Wechseln des Filterelementes (3) das Filtergehäuse von der Flüssigkeit zu entleeren, wobei das Filterelement (3) mit einem Verschlusselement (13) vorgesehen ist, welches im Betrieb des Flüssigkeitsfilters den Leerlaufkanal (10) verschließt,
**dadurch gekennzeichnet, dass** das Verschlusselement das Filterelement in Axialrichtung durchdringt.

2. Flüssigkeitsfilter nach Anspruch 1,
**dadurch gekennzeichnet,**
**dass** im Leerlaufkanal (10) eine Flüssigkeitsleiteinrichtung (12) angebracht ist, die der ablaufenden Flüssigkeit in eine Spiralbahn zwingt bzw. einen Drall versetzt, so dass diese schneller aus dem Filtergehäuse ablaufen kann.

3. Flüssigkeitsfilter nach Anspruch 1 oder 2,
**dadurch gekennzeichnet,**
**dass** im Filtergehäuse eine Einführhilfe (14) für das Verschlusselement (13) vorgesehen ist.

4. Flüssigkeitsfilter nach Anspruch 3,
**dadurch gekennzeichnet,**
**dass** im Bereich des Leerlaufkanals (10) ein Absatz (11) vorgesehen ist, der mit einem insbesondere komplementär dazu ausgebildeten Absatz (19) an dem Verschlusselement (13) zusammenwirkt, so dass im Betrieb des Flüssigkeitsfilters die untere Endscheibe (5) des Filterelementes (3) auf der Einführhilfe (14) aufliegt.

5. Flüssigkeitsfilter nach Anspruch 3,
**dadurch gekennzeichnet,**
**dass** im Bereich des Leerlaufkanals (10) ein Absatz (11) vorgesehen ist, der mit einem insbesondere komplementär dazu ausgebildeten Absatz (19) an dem Verschlusselement (13) zusammenwirkt, so dass im Betrieb des Flüssigkeitsfilters die untere Endscheibe (5) des Filterelementes (3) auf einem Boden (24) des Topfes (2) des Filtergehäuses aufliegt.

6. Flüssigkeitsfilter nach einem der Ansprüche 3 bis 5,
**dadurch gekennzeichnet,**
**dass** die Einführhilfe (14) am Boden (24) des Topfes (1) des Filtergehäuses angeordnet ist.

7. Flüssigkeitsfilter nach einem der Ansprüche 3 bis 5,
**dadurch gekennzeichnet,**
**dass** die Einführhilfe (14) an einer Wand (23) des Topfes (2) des Filtergehäuses angeordnet ist und aus mindestens einem schraubenförmigen Vorsprung (22) an der Wand (23) besteht, wobei an der unteren Endscheibe (5) mindestens eine Nase (25) vorgesehen ist, die mit dem Vorsprung (22) zusammenwirkt.

8. Flüssigkeitsfilter nach einem der Ansprüche 4 bis 7,
**dadurch gekennzeichnet,**
**dass** das Verschlusselement (13) einen Halteteil (16) und einen Gleitteil (18) aufweist, wobei der Halteteil (16) des Verschlusselementes (13) so ausgebildet ist, dass eine Filterleistung des Filterelementes (3) nicht oder nur geringfügig eingeschränkt ist.

## Claims

1. A liquid filter, in particular an oil filter, comprising a filter housing consisting of a pot (2) and a cover (1), and an exchangeable filter element (3) with an upper and a lower end plate (4, 5),
wherein the liquid filter comprises an inlet (8) and an outlet (9) for the liquid and a discharge channel (10) for the liquid for discharging the liquid from the filter housing when changing the filter element (3), wherein the filter element (3) is provided with a closure element (13) which closes the discharge channel (10) during the operation of the liquid filter,
**characterized in**
**that** the closure element penetrates the filter element in the axial direction.

2. The liquid filter according to claim 1,
**characterized in**
**that** in the discharge channel (10), a liquid conducting device (12) is attached which forces the discharging liquid into a spiral path or gives it a spin so that said liquid can discharge faster from the filter housing.

3. The liquid filter according to claim 1 or claim 2,
**characterized in**
**that** an insertion guide (14) for the closure element (13) is provided in the filter housing.

4. The liquid filter according to claim 3,
**characterized in**
**that** in the region of the discharge channel (10), a shoulder (11) is provided which, together with a shoulder (19) formed in particular complementary thereto, interacts at the closure element (13) so that during the operation of the liquid filter, the lower end plate (5) of the filter element (3) rests on the insertion guide (14).

5. The liquid filter according to claim 3,
**characterized in**
**that** in the region of the discharge channel (10), a shoulder (11) is provided which, together with a shoulder (19) formed in particular complementary thereto, interacts at the closure element (13) so that during the operation of the liquid filter, the lower end plate (5) of the filter element (3) rests on a bottom (24) of the pot (2) of the filter housing.

6. The liquid filter according to any one of the claims 3 to 5,
**characterized in**
**that** the insertion guide (14) is arranged on the bottom (24) of the pot (1) of the filter housing.

7. The liquid filter according to any one of the claims 3 to 5,
**characterized in**
**that** the insertion guide (14) is arranged on a wall (23) of the pot (2) of the filter housing and consists of at least one screw-shaped projection (22) on the wall (23), wherein on the lower end plate (5) at least one nose (25) is provided which interacts with the projection (22).

8. The liquid filter according to any one of the claims 4 to 7,
**characterized in**
**that** the closure element (13) has a holding part (16) and a sliding part (18), wherein the holding part (16) of the closure element (13) is formed such that a filter performance of the filter element (3) is not limited or only to a minor degree.

## Revendications

1. Filtre à liquide, notamment filtre à huile, comprenant un logement de filtre, constitué d'un pot (2) et d'un couvercle (1) ainsi qu'un élément de filtre (3), comportant une rondelle d'extrémité supérieure et une rondelle d'extrémité inférieure (4, 5),
dans lequel le filtre à liquide comprend une conduite d'amenée (8) et une conduite d'évacuation (9) pour le liquide, ainsi qu'un canal de marche à vide (10) pour le liquide, pour vider le logement de filtre du liquide lors du remplacement de l'élément de filtre (3), dans lequel l'élément de filtre (3) est prévu avec un élément d'obturation (13), qui obture le canal de marche à vide (10) pendant le fonctionnement du filtre de liquide,
**caractérisé en ce que**
l'élément d'obturation traverse l'élément de filtre dans la direction axiale.

2. Filtre à liquide selon la revendication 1,
**caractérisé en ce que**
un dispositif de guidage de liquide (12) est monté dans le canal de marche à vide (10), lequel contraint en un trajet spiralé ou fait tourbillonner le liquide s'écoulant, de sorte que celui-ci puisse s'écouler plus rapidement hors du logement de filtre.

3. Filtre à liquide selon les revendications 1 ou 2,
**caractérisé en ce que**
un auxiliaire d'introduction (14) destiné à l'élément d'obturation (13) est prévu dans le logement de filtre.

4. Filtre à liquide selon la revendication 3,
**caractérisé en ce que**
un épaulement (11) est prévu au niveau du canal de marche à vide (10), lequel coopère avec un épaulement (19) notamment réalisé complémentairement à cette fin sur l'élément d'obturation (13), de sorte que pendant le fonctionnement du filtre de liquide la rondelle d'extrémité inférieure (5) de l'élément de filtre (3) vienne reposer sur l'auxiliaire d'introduction (14).

5. Filtre à liquide selon la revendication 3,
**caractérisé en ce que**
au niveau du canal de marche à vide (10) un épaulement (11) est prévu, lequel coopère avec un épaulement (19) notamment réalisé complémentairement à cette fin sur l'élément d'obturation (13), de sorte que pendant le fonctionnement du filtre à liquide la rondelle d'extrémité inférieure (5) de l'élément de filtre (3) vienne reposer sur une base (24) du pot (2) du logement de filtre.

6. Filtre à liquide selon une des revendications 3 à 5,
**caractérisé en ce que**
l'auxiliaire d'introduction (14) est disposé sur la base (24) du pot (1) du logement de filtre.

7. Filtre à liquide selon une des revendications 3 à 5,
**caractérisé en ce que**
l'auxiliaire d'introduction (14) est disposé sur une paroi (23) du pot (2) du logement de filtre et est constitué d'au moins une protubérance (22) en forme de vis sur la paroi (23), dans lequel au moins un nez (25) est prévu sur la rondelle d'extrémité inférieure (5), lequel coopère avec la protubérance (22).

8. Filtre à liquide selon une des revendications 4 à 7,
**caractérisé en ce que**
l'élément d'obturation (13) présente une pièce de retenue (16) et une pièce coulissante (18), dans lequel la pièce de retenue (16) de l'élément d'obturation (13) est réalisée de telle sorte qu'une puissance de filtrage de l'élément de filtre (3) ne soit pas limitée ou seulement de manière minime.
